# EUROPEAN PATENT APPLICATION

(11) **EP 2 924 587 A1**
(43) Date of publication of application: **30.09.2015**
(21) Application number: 12890810.0
(22) Date of filing: 31.12.2012
(51) Int. Cl.: G06F 17/30

(54) **DATA PROCESSING METHOD AND DEVICE**

(71) Applicant: Huawei Technologies Co., Ltd., Longgang District Shenzhen, Guangdong 518129 (CN)
(72) Inventor: YE, Kaihe, Shenzhen Guangdong 518129 (CN)
(74) Representative: Pfenning, Meinig & Partner GbR
(86) International application number: PCT/CN2012/088073
(87) International publication number: WO 2014/101199

(57) **Abstract**

The present invention provides a data processing method and apparatus. The method is applied to a non-relational database, and includes: receiving a first query request sent by a client, where the first query request contains a queried object and a data acquiring mode; and scanning data in the queried object, and adding data obtained through scanning to the result set; if the data acquiring mode is a mode in which an unsorted result set is acquired, after the result set meets a preset condition, stopping scanning, sending the result set that meets the condition to the client, and recording information of a first location where the current scanning stops; or if the data acquiring mode is a mode in which a sorted result set is acquired, after the result set meets a preset condition, saving the result set to temporary space, and after scanning is complete, sorting all data saved in the temporary space, extracting and sending a sorted result set in batches to the client, and recording information of a second location of each extraction.

## Description

### TECHNICAL FIELD

The present invention relates to computer technologies, and in particular, to a data processing method and apparatus.

### BACKGROUND

Continuous development of the Internet has contributed to increasingly wide use of Internet applications, and meanwhile presented greater challenges to database storage on which the Internet applications rely. At present, it is difficult for a traditional relational database to store massive data for Internet companies. Therefore, the database industry is gradually shifting from being dominated by traditional relational databases (such as Oracle, DB2, and MySQL) to promoting database diversity, especially promoting growth of non-relational databases.

In the conventional solution, a non-relational database has the following advantages: mass storage, high availability, and partition expansion. A non-relational database differs greatly from a traditional relational database in terms of software architecture and model. Another noticeable difference lies in data distribution. Data in a non-relational database is mainly distributed in a memory table and a data file, and data in a memory table is a part of intact data rather than a copy of data.

However, a result set usually has to be extracted from a non-relational database at a time because of the distribution manner of data in the non-relational database, which renders result set extraction a memory-demanding operation and further leads to a relatively slow response to the result set extraction.

### SUMMARY

The present invention provides a data process method and apparatus, to avoid the conventional problem in which a result set usually has to be extracted from a non-relational database at a time and consequently a memory breakdown is incurred due to the result set occupying too much memory space. The present invention effectively accelerates response to result set acquiring.

According to a first aspect of the present invention, a data processing method is provided, where the method is applied to a non-relational database, and includes:
scanning data in a queried object, and adding data obtained through scanning to a result set; and
if a data acquiring mode is a mode in which an unsorted result set is acquired, after the result set meets a preset condition, stopping scanning, sending the result set that meets the condition to the client, and recording information of a first location where the current scanning stops; or
if a data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction.

In a first possible implementation of the first aspect, the queried object includes a memory table, and if scanning of data in at least one memory table is not complete and a persistence condition is reached, the method further includes:
when dumping the data in the at least one memory table to at least one data file, recording mapping information between the at least one data file and the at least one memory table.

With reference to the first aspect or the first possible implementation of the first aspect, in a second possible implementation of the first aspect, after the step of, if a data acquiring mode is a mode in which an unsorted result set is acquired, after the result set meets a preset condition, stopping scanning, sending the result set that meets the condition to the client, and recording information of a first location where the current scanning stops, the method further includes:
configuring a unique query identifier for the first query request; and
saving the information of the first location, the queried object, and the data acquiring mode, and mapping the information of the first location, the queried object, and the data acquiring mode to the query identifier;
the sending the result set that meets the condition to the client includes:
   sending the query identifier and the result set that meets the condition to the client.

With reference to the second possible implementation of the first aspect, in a third possible implementation of the first aspect, the method further includes:
receiving a second query request sent by the client, where the second query request contains the query identifier;
scanning data in the queried object according to the second query request, and also according to the information of the first location which corresponds to the query identifier, the queried object which corresponds to the query identifier, and the data acquiring mode which corresponds to the query identifier; and adding data obtained through scanning to the result set;
after the result set meets the preset condition, stopping scanning, sending the result set that meets the condition to the client, and recording information of a third location where the current scanning stops; and
updating the information of the first location which corresponds to the query identifier with the information of the third location which corresponds to the query identifier.

With reference to the second possible implementation of the first aspect, in a fourth possible implementation of the first aspect, the method further includes:
receiving a second query request sent by the client, where the second query request contains the query identifier;
scanning data in the queried object according to the second query request, the information of the first location, the queried object, and the data acquiring mode which correspond to the query identifier, and the mapping information between the at least one data file and the at least one memory table; and adding data obtained through scanning to the result set;
after the result set meets the preset condition, stopping scanning, sending the result set that meets the condition to the client, and recording information of a third location where the current scanning stops; and
updating the information of the first location which corresponds to the query identifier with the information of the third location which corresponds to the query identifier.

With reference to the third or fourth possible implementation of the first aspect, in a fifth possible implementation of the first aspect, when the first query request contains a query mode and the query mode is a sequential query mode, the information of the first location and the information of the second location each indicates a scanning location where the current scanning in a memory table ends, or a scanning location where the current scanning in a data file ends; or
when the query mode is a parallel query mode, the information of the first location and the information of the second location each indicates a scanning location in a memory table and a scanning location in a data file.

With reference to the first aspect or the first possible implementation of the first aspect, in a sixth possible implementation of the first aspect, the step, if a data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction, includes:
if the data acquiring mode is a mode in which a sorted result set is acquired, after the result set meets a preset condition, saving the result set to a memory page, continuing scanning, and after scanning is complete, sorting all data saved in the memory page, adding the sorted data to the result set that meets the preset condition, sending the sorted data in batches to the client, and recording the information of the second location of each extraction;
where the temporary space includes the memory page.

With reference to the first aspect or the first possible implementation of the first aspect, in a seventh possible implementation of the first aspect, the step, if a data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction, includes:
if the data acquiring mode is a mode in which a sorted result set is acquired, after the result set meets a preset condition, saving the result set to a memory page, sorting, in the memory page, data in the result set, and then putting a sorted result set in a temporary page; and
after scanning is complete, sorting, in the temporary space in a K-way merge manner, the sorted result set; sequentially extracting and sending the client, in batches, the result set that is sorted in the K-way merge manner, and recording information of a second location of each extraction;
where the temporary space includes the memory page and the temporary page.

According to a second aspect of the present invention, a data processing apparatus is provided, where the apparatus is applied to a non-relational database, and includes:
a receiving module, configured to receive a first query request sent by a client, where the first query request contains a queried object and a data acquiring mode;
a scanning module, configured to scan data in the queried object, and add data obtained through scanning to a result set; and
a result set processing module, configured to: if the data acquiring mode is a mode in which an unsorted result set is acquired, after the result set meets a preset condition, trigger the scanning module to stop scanning, send the result set that meets the condition to the client, and then record information of a first location where the current scanning stops;
the result set processing module is further configured to: if the data acquiring mode is a mode in which a sorted result set is acquired, after the result set meets a preset condition, save the result set to temporary space, continue scanning, and after scanning is complete, sort all data saved in the temporary space, add the sorted data to the result set that meets the preset condition, send the sorted data in batches to the client, and record information of a second location of each extraction.

In a first possible implementation of the second aspect, the queried object includes a memory table, and if scanning of data in at least one memory table is not complete and a persistence condition is reached, the apparatus further includes:
a recording module, configured to: when dumping the data in the at least one memory table to at least one data file, record mapping information between the at least one data file and the at least one memory table.

With reference to the second aspect or the first possible implementation of the second aspect, in a second possible implementation of the second aspect, the apparatus further includes:
a configuring module, configured to configure a unique query identifier for the first query request; and
a saving module, configured to save the information of the first location, the queried object, and the data acquiring mode, and map the information of the first location, the queried object, and the data acquiring mode to the query identifier;
the result set processing module is specifically configured to: if the data acquiring mode is a mode in which an unsorted result set is acquired, after the result set meets the preset condition, stop scanning, send the query condition and the result set that meets the condition to the client, and record the information of the first location where the current scanning stops.

With reference to the second possible implementation of the second aspect, in a third possible implementation of the second aspect, the receiving module is further configured to receive a second query request sent by the client, and the second query request contains the query identifier;
the scanning module is further configured to scan data in the queried object according to the second query request, and also according to the information of the first location, the queried object, and the data acquiring mode which correspond to the query identifier, and add data obtained through scanning to the result set; and
the result set processing module is further configured to: after the result set meets the preset condition, trigger the scanning module to stop scanning, send the result set that meets the preset condition to the client, record information of a third location where the current scanning stops, and update the information of the first location which corresponds to the query identifier with the information of the third location which corresponds to the query identifier.

With reference to the second possible implementation of the second aspect, in a fourth possible implementation of the second aspect, the receiving module is further configured to receive a second query request sent by the client, and the second query request contains the query identifier;
the scanning module is further configured to scan data in the queried object according to the second query request, the information of the first location which corresponds to the query identifier, the queried object which corresponds to the query identifier, the data acquiring mode which corresponds to the query identifier, and the mapping information between the at least one data file and the at least one memory table; and add data obtained through scanning to the result set; and
the result set processing module is further configured to: after the result set meets the preset condition, trigger the scanning module to stop scanning, send the result set that meets the condition to the client, record information of a third location where the current scanning stops, and update the information of the first location which corresponds to the query identifier with the information of the third location which corresponds to the query identifier.

With reference to the second aspect or the first possible implementation of the second aspect, in a fifth possible implementation of the second aspect, the result set processing module is further specifically configured to: if the data acquiring mode is a mode in which a sorted result set is acquired, after the result set meets a preset condition, save the result set to a memory page, continue scanning, and after the scanning module completes scanning, sort all data saved in the memory page, add the sorted data to the result set that meets the preset condition, send the sorted data in batches to the client, and record the information of the second location of each extraction;
where the temporary space includes the memory page.

With reference to the second aspect or the first possible implementation of the second aspect, in a sixth possible implementation of the second aspect, the result set processing module is further specifically configured to: if the data acquiring mode is a mode in which a sorted result set is acquired, after the result set meets a preset condition, save the result set to a memory page, sort, in the memory page, data in the result set, put a sorted result set in a temporary page, and after scanning is complete, sort, in the temporary space in a K-way merge manner, the sorted result set; sequentially extract and send the client, in batches, the result set that is sorted in the K-way merge manner, and recording information of a second location of each extraction;
where the temporary space includes the memory page and the temporary page.

Technical effects of the present invention are as follows: receiving a first query request sent by a client, where the first query request contains a queried object and a data acquiring mode; and scanning data in the queried object, and adding data obtained through scanning to the result set; if the data acquiring mode is a mode in which an unsorted result set is acquired, after the result set meets a preset condition, stopping scanning, sending the result set that meets the preset condition to the client, and recording information of a first location where the current scanning stops; or if the data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending a sorted result set in batches to the client, and recording information of a second location of each extraction. In this way, it is ensured that no memory breakdown is due to an excessively large result set. By avoiding the prior art problem in which a result set usually has to be extracted from a non-relational database at a time and consequently a memory breakdown is incurred due to the result set occupying too much memory space, the present invention effectively accelerates response to result set acquiring.

### BRIEF DESCRIPTION OF DRAWINGS

FIG. 1 is a schematic diagram of an architecture of a database on which a data processing method is based according to the present invention;
FIG. 2 is a flowchart of an embodiment of a data processing method according to the present invention;
FIG. 3 is a flowchart of another embodiment of a data processing method according to the present invention;
FIG. 4 is a flowchart of still another embodiment of a data processing method according to the present invention;
FIG. 5 is a schematic structural diagram of an embodiment of a data processing apparatus according to the present invention;
FIG. 6 is a schematic structural diagram of another embodiment of a data processing apparatus according to the present invention; and
FIG. 7 is an architectural hardware diagram of a data processing apparatus according to an embodiment of the present invention.

### DESCRIPTION OF EMBODIMENTS

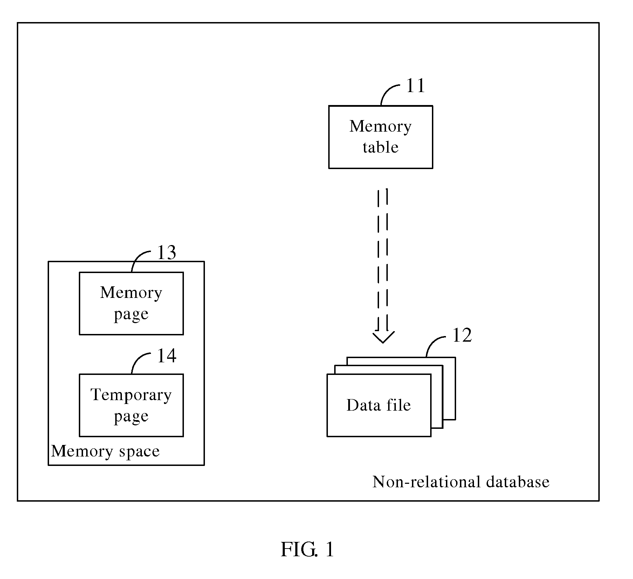

FIG. 1 is a schematic diagram of an architecture of a non-relational database on which a data processing method is based according to the present invention. As shown in FIG. 1, the database includes: a memory table 11, a data file 12, a memory page 13, and a temporary page 14. Data may be distributed in the memory table 11, the data file 12, or both, where data in the memory table 11 is a part of intact data rather than a copy of data. Scanning may be performed on the memory table 11 and the data file 12, and data obtained through scanning may be temporarily saved in the memory page 13, or in the memory page 13 and the temporary page 14. It should be noted that the memory page 13 and the temporary page 14 belong to memory space.

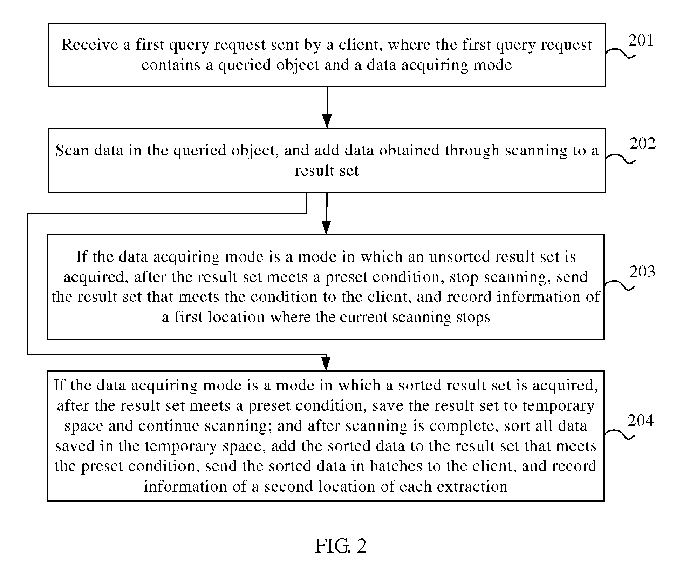

FIG. 2 is a flowchart of an embodiment of a data processing method according to the present invention. With reference to the database shown in FIG. 1, as shown in FIG. 2, this embodiment is executed by a data processing apparatus, and the method is applied to a non-relational database. The method includes:
Step 201: Receive a first query request sent by a client, where the first query request contains a queried object and a data acquiring mode.
Step 202: Scan data in the queried object, and add data obtained through scanning to a result set.

In this embodiment, preferably, the data acquiring mode may be a mode in which an unsorted result set is acquired or a mode in which a sorted result set is acquired. When the data acquiring mode is a mode in which an unsorted result set is acquired, step 203 may be executed; when the data acquiring mode is a mode in which a sorted result set is acquired, step 204 may be executed.
Step 203: If the data acquiring mode is a mode in which an unsorted result set is acquired, after the result set meets a preset condition, stop scanning, send the result set that meets the preset condition to the client, and record information of a first location where the current scanning stops. The procedure of the method ends.
Step 204: If the data acquiring mode is a mode in which a sorted result set is acquired, after the result set meets a preset condition, save the result set that meets the preset condition to temporary space, continue scanning, and after scanning is complete, sort all data saved in the temporary space, add the sorted data to the result set that meets the preset condition, extract and send a sorted result set in batches to the client, and record information of a second location of each extraction.

In this embodiment, the preset condition is used to prevent a memory breakdown due to a result set occupying too much memory space. Preferably, the preset condition may be the number of data entries in a result set or a capacity of a result set. For example, when it is mentioned that the result set meets the preset condition, it may specifically be that: the number of data entries in the result set meets a preset number of data entries in a result set; or, the result set capacity meets a preset capacity of a result set.

In this embodiment, it is ensured that no memory breakdown is due to an excessively large result set. By avoiding the prior art problem in which a result set usually has to be extracted from a non-relational database at a time and consequently a memory breakdown is incurred due to the result set occupying too much memory space, the present invention effectively accelerates response to result set acquiring.

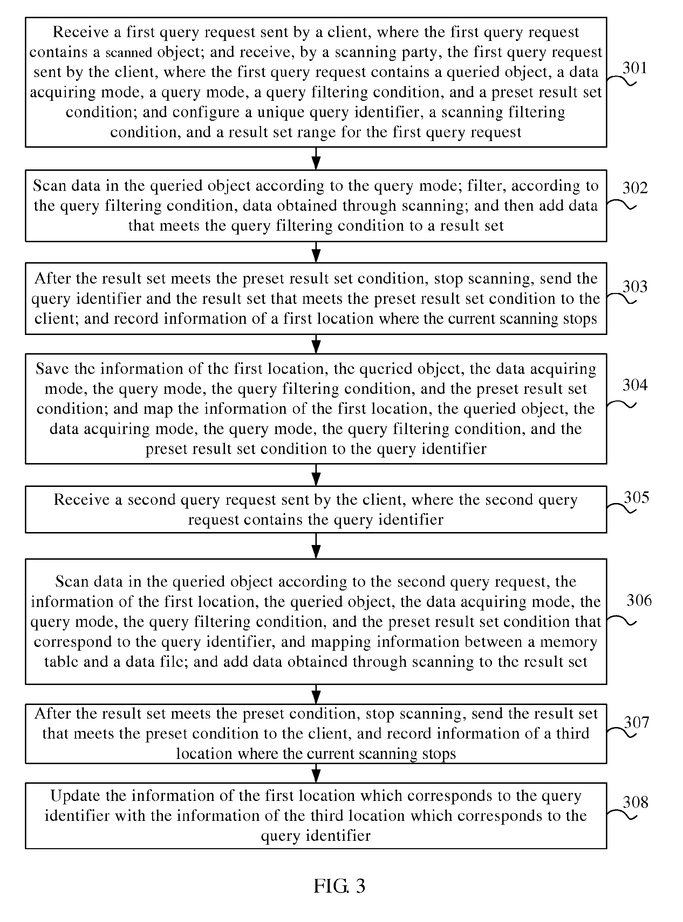

FIG. 3 is a flowchart of another embodiment of a data processing method according to the present invention. In this embodiment, technical solutions of this embodiment are described in detail based on an example in which an acquiring mode is a mode in which an unsorted result set is acquired. As shown in FIG. 3, the method includes:
Step 301: Receive a first query request sent by a client and configure a unique query identifier for the first query request, where the first query request contains a queried object, a data acquiring mode, a query mode, a query filtering condition, and a preset result set condition.

It should be noted that, in addition to the queried object and the data acquiring mode, the first query request may further contain one or a combination of the following: the query mode, the query filtering condition, the preset result set condition. In the example of this embodiment, preferably, the first query request further contains the query mode, the query filtering condition, and the preset result set condition.

The query mode may be a sequential query mode or a parallel query mode. The query filtering condition includes a data feature, so that data that is obtained through scanning can be filtered according to the data feature, in order to acquire data that matches the data feature in the query filtering condition. For example, if the queried object is student scores and the first query request does not carry a query filtering condition, all data of student scores obtained through scanning is added to a result set. If the queried object is student scores and the first query request carries a query filtering condition stating that student scores higher than 60 are requested, data of student scores higher than 60 obtained through scanning is added to a result set.
Step 302: Scan data in the queried object according to the query mode; filter, according to the query filtering condition, data obtained through scanning; and then add data that meets the query filtering condition to a result set.
Step 303: After the result set meets the preset result set condition, stop scanning, send the query identifier and the result set that meets the preset result set condition to the client, and record information of a first location where the current scanning stops.

In this embodiment, after the first query request is received, data in the queried object indicated in the first query request is scanned entry by entry according to the query mode in the first query request; and data obtained through scanning is added to a result set. After the result set meets the preset result set condition, scanning is stopped, and the result set that meets the preset result set condition is sent to the client. After the result set is sent to the client, the data in the result set is cleared, so as to prepare the result set for storing data obtained by next scanning.

In addition, in this embodiment, the preset result set condition may be the number of data entries in a result set or a capacity of a result set. The preset result set condition may be the same as or may be different from the preset condition mentioned in the foregoing embodiment. In this embodiment, the preset result set condition is greater than or equal to an upper limit threshold.

It should be noted that, when the preset result set condition is less than the upper limit threshold, operations in step 303 may be executed. When the preset result set condition is greater than or equal to the upper limit threshold, a specific implementation manner of step 303 may be that: after the result set meets the preset condition, stopping scanning, sending the result set that meets the preset condition to the client, and recording information of a first location where the current scanning stops.
Step 304: Save the information of the first location, the queried object, the data acquiring mode, the query mode, the query filtering condition, and the preset result set condition; and map the information of the first location, the queried object, the data acquiring mode, the query mode, the query filtering condition, and the preset result set condition to the query identifier.

In this embodiment, after the client receives the result set, if it is determined that the requested result set is not completely acquired, the client requests to acquire a next batch of result set, thereby triggering a data processing apparatus to continue scanning according to the information of the first location where the current scanning stops; if it is determined that the requested result set is completely acquired, processing ends.

More preferably, in this embodiment, the information of the first location may be as described in Table 1:

**Table 1**

| **Data source** | **Location information** | **Remarks** |
|---|---|---|
| Memory table | Memory table id+rowkey+supername | Multiple groups* |
| Data file | File name + file offset | Multiple groups* |

In the table, id is used to identify a memory table, rowkey is used to identify a user, and supername is used to identify data of the user. "Multiple groups*" is used to indicate that there are multiple memory tables and data files.
Step 305: Receive a second query request sent by the client, where the second query request contains the query identifier.

In this embodiment, after receiving the result set, the client performs determining. After determining that the requested result set is not completely acquired, the client may continue to send a query request, so as to continue to acquire the result set.
Step 306: Scan data in the queried object according to the second query request, the information of the first location, the queried object, the data acquiring mode, the query mode, the query filtering condition, and the preset result set condition which correspond to the query identifier, and mapping information between a memory table and a data file; and add data obtained through scanning to the result set.

In this embodiment, when the queried object includes a memory table, or includes both a memory table and a data file, the method further includes: after the query identifier and the result set that meets the preset result set condition are sent to the client, if scanning of data in at least one memory table is not complete and a persistence condition is reached, the data in the at least one memory is dumped to at least one data file, and mapping information between the at least one data file and the at least one memory table is record. In this way, when scanning is continued, if scanning of data in one memory table in the queried object is not complete and a persistence condition is reached, the mapping information is queried according to the information of the first location, so as to acquire the mapping information between the one memory table and a data file; a data file corresponding to the one memory table is found according to the mapping information between the one memory table and the data file; and data in the data file is scanned.
Step 307: Stop scanning after the result set meets the preset condition, send the result set that meets the preset condition to the client, and record information of a third location where the current scanning stops.
Step 308: Update the information of the first location which corresponds to the query identifier with the information of the third location which corresponds to the query identifier.

In addition, it should be noted that, when the queried object includes a memory table, or includes both a memory table and a data file, there is another specific implementation of step 306. After the query identifier and the foregoing result set are sent to the client, if scanning of data in the memory table is not complete and a persistence condition is not reached, another specific implementation of step 306 is:
scanning data in the queried object according to the second query request, and also according to the information of the first location, the queried object, the data acquiring mode, the query mode, the query filtering condition, and the preset result set condition which correspond to the query identifier; and adding data obtained through scanning to the result set.

The persistence condition may one of the following: data in a memory table reaches a preset threshold, and data in a memory table reaches preset configuration time. It should be noted that, when a memory table reaches the persistence condition, data in the memory table is dumped to a data file.

Further, in still another embodiment of the present invention, in the embodiment shown in FIG. 3, when the query mode is a sequential query mode, the information of the first location and the information of the second location each indicates a scanning location where the current scanning in a memory table ends or a scanning location where the current scanning in a data file ends; or
when the query mode is a parallel query mode, the information of the first location and the information of the second location each indicates scanning locations in multiple memory tables and scanning locations in multiple data files.

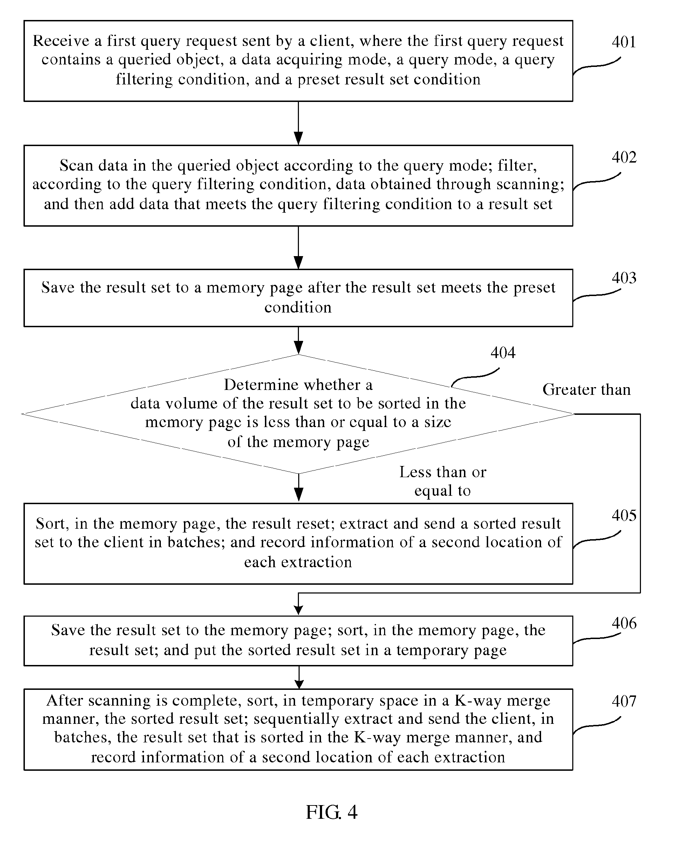

FIG. 4 is a flowchart of still another embodiment of a data processing method according to the present invention. In this embodiment, technical solutions of this embodiment are described in detail based on an example in which an acquiring mode is a mode in which a sorted result set is acquired. As shown in FIG. 4, the method includes:
Step 401: Receive a first query request sent by a client, where the first query request contains a queried object, a data acquiring mode, a query mode, a query filtering condition, and a preset result set condition.
Step 402: Scan data in the queried object according to the query mode; filter, according to the query filtering condition, data obtained through scanning; and then add data that meets the query filtering condition to a result set.
Step 403: Save the result set to a memory page after the result set meets the preset condition.

In this embodiment, memory space includes a memory page and a temporary page.
Step 404: Determine whether a data volume of the result set to be sorted in the memory page is less than or equal to a size of the memory page. If the data volume is less than or equal to the size of the memory page, execute step 405; if the data volume is greater than the size of the memory page, execute step 406.
Step 405: Sort, in the memory page, the result set; extract and send a sorted result set to the client in batches; and record information of a second location of each extraction. The procedure of the method ends.
Step 406: Save the result set to the memory page; sort, in the memory page, the result set; and put the sorted result set in a temporary page.

In this embodiment, a data volume of sorted result sets in the memory page is greater than the size of the memory page, and the result sets in the memory page need to be partially sorted. That is, if there are multiple result sets in the memory page, the multiple result sets are classified, and the classified result sets are sorted, and then put in the temporary page.
Step 407: After scanning is complete, sort, in the temporary space in a K-way merge manner, the sorted result set; sequentially extract and send the client, in batches, the result set that is sorted in the K-way merge manner, and record information of a second location of each extraction.

It should be noted that, in this embodiment, the information of the second location may be as described in Table 2:

**Table 2**

| **Data source** | **Location information** |
|---|---|
| Memory page | Memory page ID + offset |
| Temporary space | Temporary space block number + offset |

Further, in still another embodiment of the present invention, based on the foregoing method embodiments, the queried object includes a memory table; and if scanning of data in at least one memory table is not complete and a persistence condition is reached, the method further includes:
when dumping the data in the at least one memory table to at least one data file, recording mapping information between the at least one data file and the at least one memory table.

In this embodiment, when a memory table is initialized, a mapping relationship between a memory table ID and a data file ID is established, and a corresponding reference count is configured for each memory table, where an initial reference count is 0. The reference count corresponding to a memory table is used to indicate whether the memory table is referenced (that is, scanned). For example, when a memory table is referenced (that is, the memory table is scanned), a reference count corresponding to the memory table increases by 1; when the reference ends, the reference count corresponding to the memory table decreases by 1. For a scenario in which a result set is acquired in multiple batches, when it is started to acquire a first batch of the result set, a reference count of a referenced memory table may increase by 1; and the reference count of the memory table may decrease by 1 only when acquiring of the result set is complete or the memory table is no longer referenced subsequently.

In addition, during a period in which a result set is acquired in multiple batches, when data in a referenced memory table reaches a persistence condition, and when the memory table Flushes (a process in which the data in the memory table is flushed to a data file), it is determined whether a reference count of the memory table is zero. If it is not zero (which indicates that scanning of the data in the memory table is not complete), a reference of the memory table is set to NULL. Meanwhile, a reference of a data file corresponding to the memory table is set to a persistent file reference, and mapping information is generated according to a mapping relationship between an ID of the memory table and an ID of a data file (for example, rowkey+supername is mapped to a file offset). At the same time, the reference count corresponding to the memory table is set to zero. When scanning is continued, the reference of the memory table is set to NULL, and therefore, the mapping information is queried to acquire the data file corresponding to the memory table, so as to scan the data file.

In addition, when a memory table corresponding to a reference count is already persistent, and the reference count is 0, it indicates that scanning in the memory table is complete. Therefore, the mapping relationship between an ID of the memory table and an ID of a data file corresponding to the memory table may be deleted.

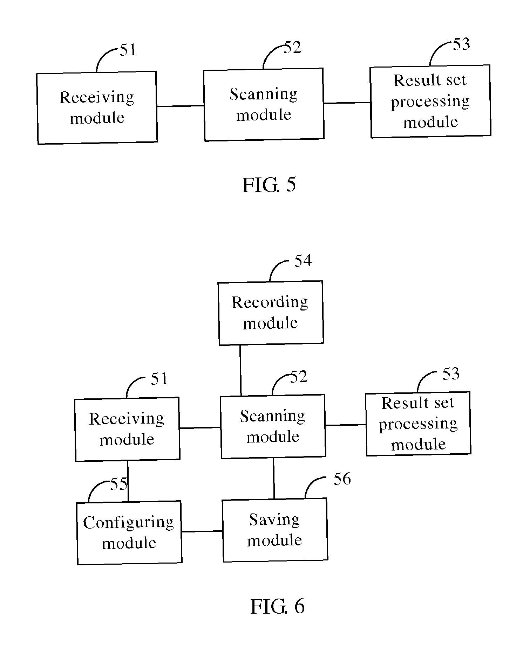

FIG. 5 is a schematic structural diagram of an embodiment of a data processing apparatus according to the present invention. As shown in FIG. 5, the apparatus according to this embodiment is applied to a non-relational database, and the apparatus includes: a receiving module 51, a scanning module 52, and a result set processing module 53. The receiving module 51 is configured to receive a first query request sent by a client, where the first query request contains a queried object and a data acquiring mode. The scanning module 52 is configured to scan data in the queried object, and add data obtained through scanning to a result set. The result set processing module 53 is configured to: if the data acquiring mode is a mode in which an unsorted result set is acquired, after the result set meets a preset condition, trigger the scanning module to stop scanning, send the result set that meets the preset condition to the client, and then record information of a first location where the current scanning stops. Alternatively, the result set processing module 53 is further configured to: if the data acquiring mode is a mode in which a sorted result set is acquired, after the result set meets a preset condition, save the result set to temporary space, and continue scanning; and after scanning is complete, sort all data saved in the temporary space, add the sorted data to the result set that meets the preset condition, send the sorted data in batches to the client, and record information of a second location of each extraction.

The data processing apparatus according to this embodiment can execute the technical solutions of the method embodiment shown in FIG. 2, and the philosophy behind implementation of the data processing apparatus is similar to that of the method embodiment. Details are not described herein again.

In this embodiment, a first query request sent by a client is received, where the first query request contains a queried object and a data acquiring mode; and data in the queried object is scanned, and data obtained through scanning is added to a result set; if the data acquiring mode is a mode in which an unsorted result set is acquired, after the result set meets a preset condition, scanning is stopped, the result set that meets the preset condition is sent to the client, and information of a first location where the current scanning stops is recorded; or if the data acquiring mode is a mode in which a sorted result set is acquired, after the result set meets a preset condition, the result set is saved to temporary space, scanning continues, and after scanning is complete, all data saved in the temporary space is sorted, the sorted data is added to the result set that meets the preset condition, a sorted result set is sent in batches to the client, and information of a second location of each extraction is recorded. In this way, it is ensured that no memory breakdown is due to an excessively large result set. By avoiding the prior art problem in which a result set usually has to be extracted from a non-relational database at a time and consequently a memory breakdown is incurred due to the result set occupying too much memory space, the present invention effectively accelerates response to result set acquiring.

FIG. 6 is a schematic structural diagram of another embodiment of a data processing apparatus according to the present invention. Based on the embodiment shown in FIG. 5, as shown in FIG. 6, the queried object includes a memory table. If scanning of data in at least one memory table is not complete and a persistence condition is reached, the apparatus further includes: a recording module 54, configured to: when the data in the at least one memory table is dumped to at least one data file, record mapping information between the at least one data file and the at least one memory table.

Preferably, the apparatus further includes: a configuring module 55 and a saving module 56. The configuring module 55 is configured to configure a unique query identifier for the first query request. The saving module 56 is configured to save the information of the first location, the queried object, and the data acquiring mode, and map the information of the first location, the queried object, and the data acquiring mode to the query identifier.

The result set processing module 53 is specifically configured to: if the data acquiring mode is a mode in which an unsorted result set is acquired, after the result set meets the preset condition, trigger the scanning module to stop scanning, send the query condition and the result set that meets the preset condition to the client, and record the information of the first location where the current scanning stops.

More preferably, the receiving module 51 is further configured to receive a second query request sent by the client, where the second query request contains the query identifier;
the scanning module 52 is further configured to scan data in the queried object according to the second query request, and also according to the information of the first location, the queried object, and the data acquiring mode which correspond to the query identifier; and add data obtained through scanning to the result set; and
the result set processing module 53 is further configured to: after the result set meets the preset condition, trigger the scanning module to stop scanning, send the result set that meets the preset condition to the client, record information of a third location where the current scanning stops, and update the information of the first location which corresponds to the query identifier with the information of the third location which corresponds to the query identifier.

Alternatively, more preferably, the receiving module 51 is further configured to receive a second query request sent by the client, where the second query request contains the query identifier;
the scanning module 52 is further configured to scan data in the queried object according to the second query request, the information of the first location, the queried object, and the data acquiring mode which correspond to the query identifier, and the mapping information between the at least one data file and the at least one memory table; and add data obtained through scanning to the result set; and
the result set processing module 53 is further configured to: after the result set meets the preset condition, trigger the scanning module to stop scanning, send the result set that meets the preset condition to the client, record information of a third location where the current scanning stops, and update the information of the first location which corresponds to the query identifier with the information of the third location which corresponds to the query identifier.

The data processing apparatus according to this embodiment can execute the technical solutions of the method embodiment shown in FIG. 3, and the philosophy behind implementation of the data processing apparatus is similar to that of the method embodiment. Details are not described herein again.

In a schematic structural diagram of still another embodiment of the present invention, based on the embodiment shown in FIG. 5, the result set processing module 53 is further specifically configured to: if the data acquiring mode is a mode in which a sorted result set is acquired, after the result set meets a preset condition, save the result set to a memory page, continue scanning; after the scanning module completes scanning, sort all data saved in the memory page, add the sorted data to the result set that meets the preset condition, extract and send the sorted data in batches to the client, and record information of a second location of each extraction.

The temporary space includes the memory page.

Alternatively, the result set processing module 53 is further specifically configured to: if the data acquiring mode is a mode in which a sorted result set is acquired, after the result set meets a preset condition, save the result set to a memory page; sort, in the memory page, data in the result set; and then add a sorted result set to a temporary page; after the scanning module completes scanning, sort, in the temporary space in a K-way merge manner, the sorted result set; sequentially extract and send the client, in batches, the result set that is sorted in the K-way merge manner, and record the information of the second location of each extraction.

The temporary space includes the memory page and the temporary page.

The data processing apparatus according to this embodiment can execute the technical solutions of the method embodiment shown in FIG. 4, and the philosophy behind implementation of the data processing apparatus is similar to that of the method embodiment. Details are not described herein again.

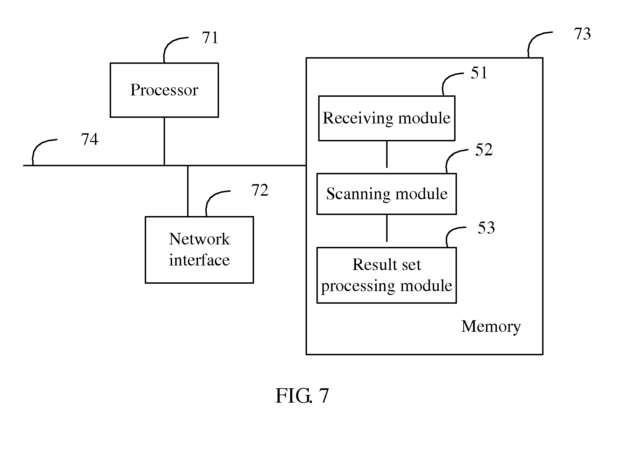

FIG. 7 illustrates architectural hardware of a data processing apparatus according to another embodiment of the present invention. The apparatus includes at least one processor 71 (such as a CPU), at least one network interface 72 or another communication interface, a memory 73, and at least one communications bus 74 that is used to implement connection and communication among these components of the apparatus. The processor 71 is configured to execute an executable module stored in the memory 73, for example, a computer program. The memory 73 may include a high speed random access memory (RAM: Random Access Memory), and may also further include a non-volatile memory (non-volatile memory), for example, at least one disk memory. The at least one network interface 72 (which may be wired or wireless) is used to implement a communicative connection between a system gateway and at least one another network element. The Internet, a wide area network, a local area network, and a metropolitan area network may be used.

In some implementations, the memory 73 stores a program instruction, where the program instruction may be executed by the processor 71; and the program instruction includes a receiving module 51, a scanning module 52, and a result set processing module 53. For a detailed implementation of each module, refer to a corresponding module disclosed in the embodiment of FIG. 5. Details are not described herein again.

Based on the foregoing descriptions of the embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or a disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

The foregoing is merely exemplary embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. A data processing method, wherein the method is applied to a non-relational database, and comprises:
receiving a first query request sent by a client, wherein the first query request contains a queried object and a data acquiring mode;
scanning data in the queried object, and adding data obtained through scanning to a result set; and
if the data acquiring mode is a mode in which an unsorted result set is acquired, after the result set meets a preset condition, stopping scanning, sending the result set that meets the condition to the client, and recording information of a first location where the current scanning stops; or
if the data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction.

2. The method according to claim 1, wherein the queried object comprises a memory table, and if scanning of data in at least one memory table is not complete and a persistence condition is reached, the method further comprises:
when dumping the data in the at least one memory table to at least one data file, recording mapping information between the at least one data file and the at least one memory table.

3. The method according to claim 1 or 2, wherein after the step of, if the data acquiring mode is a mode in which an unsorted result set is acquired, after the result set meets a preset condition, stopping scanning, sending the result set that meets the condition to the client, and recording information of a first location where the current scanning stops, the method further comprises:
configuring a unique query identifier for the first query request; and
saving the information of the first location, the queried object, and the data acquiring mode, and mapping the information of the first location, the queried object, and the data acquiring mode to the query identifier;
the sending the result set that meets the condition to the client comprises:
sending the query identifier and the result set that meets the condition to the client.

4. The method according to claim 3, further comprising:
receiving a second query request sent by the client, wherein the second query request contains the query identifier;
scanning data in the queried object according to the second query request, and also according to the information of the first location, the queried object, and the data acquiring mode which correspond to the query identifier, and adding data obtained through scanning to the result set;
after the result set meets the preset condition, stopping scanning, sending the result set that meets the condition to the client, and recording information of a third location where the current scanning stops; and
updating the information of the first location which corresponds to the query identifier with the information of the third location which corresponds to the query identifier.

5. The data processing method according to claim 3, further comprising:
receiving a second query request sent by the client, wherein the second query request contains the query identifier;
scanning data in the queried object according to the second query request, the information of the first location corresponding to the query identifier, the queried object corresponding to the query identifier, the data acquiring mode corresponding to the query identifier, and the mapping information between the at least one data file and the at least one memory table; and adding data obtained through scanning to the result set;
after the result set meets the preset condition, stopping scanning, sending the result set that meets the condition to the client, and recording information of a third location where the current scanning stops; and
updating the information of the first location which corresponds to the query identifier with the information of the third location which corresponds to the query identifier.

6. The data processing method according to claim 4 or 5, wherein when the first query request contains a query mode, and the query mode is a sequential query mode, the information of the first location and the information of the second location each indicates a scanning location where the current scanning in a memory table ends, or a scanning location where the current scanning in a data file ends; or
when the query mode is a parallel query mode, the information of the first location and the information of the second location each indicates a scanning location in a memory table and a scanning location in a data file.

7. The data processing method according to claim 1 or 2, wherein the step of, if the data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction, comprises:
if the data acquiring mode is a mode in which a sorted result set is acquired, after the result set meets the preset condition, saving the result set to a memory page, continuing scanning, and after scanning is complete, sorting all data saved in the memory page, adding the sorted data to the result set that meets the preset condition, sending the sorted data in batches to the client, and recording the information of the second location of each extraction;
wherein the temporary space comprises the memory page.

8. The data processing method according to claim 1 or 2, wherein the step of, if the data acquiring mode is a mode in which a sorted result set is acquired, after the result set meets a preset condition, saving the result set to temporary space, continuing scanning, and after scanning is complete, sorting all data saved in the temporary space, adding the sorted data to the result set that meets the preset condition, sending the sorted data in batches to the client, and recording information of a second location of each extraction, comprises:
if the data acquiring mode is a mode in which a sorted result set is acquired, after the result set meets the preset condition, saving the result set to a memory page, sorting, in the memory page, data in the result set, and then putting a sorted result set in a temporary page; and
after scanning is complete, sorting, in the temporary space in a K-way merge manner, the sorted result set; sequentially extracting and sending the client, in batches, the result set that is sorted in the K-way merge manner, and recording the information of the second location of each extraction;
wherein the temporary space comprises the memory page and the temporary page.

9. A data processing apparatus, wherein the apparatus is applied to a non-relational database, and comprises:
a receiving module, configured to receive a first query request sent by a client, wherein the first query request contains a queried object and a data acquiring mode;
a scanning module, configured to scan data in the queried object, and add data obtained through scanning to a result set; and
a result set processing module, configured to: if the data acquiring mode is a mode in which an unsorted result set is acquired, after the result set meets a preset condition, trigger the scanning module to stop scanning, send the result set that meets the condition to the client, and then record information of a first location where the current scanning stops; or
the result set processing module, further configured to: if the data acquiring mode is a mode in which a sorted result set is acquired, after the result set meets a preset condition, save the result set to temporary space, continue scanning, and after scanning is complete, sort all data saved in the temporary space, add the sorted data to the result set that meets the preset condition, send the sorted data in batches to the client, and record information of a second location of each extraction.

10. The data processing apparatus according to claim 8, wherein the queried object comprises a memory table, and if scanning of data in at least one memory table is not complete and a persistence condition is reached, the apparatus further comprises:
a recording module, configured to record mapping information between the at least one data file and the at least one memory table when dumping the data in the at least one memory table to at least one data file.

11. The data processing apparatus according to claim 9 or 10, further comprising:
a configuring module, configured to configure a unique query identifier for the first query request; and
a saving module, configured to save the information of the first location, the queried object, and the data acquiring mode, and map the information of the first location, the queried object, and the data acquiring mode to the query identifier;
the result set processing module is specifically configured to: if the data acquiring mode is a mode in which an unsorted result set is acquired, after the result set meets the preset condition, stop scanning, send the query condition and the result set that meets the condition to the client, and record the information of the first location where the current scanning stops.

12. The data processing apparatus according to claim 11, wherein the receiving module is further configured to receive a second query request sent by the client, and the second query request contains the query identifier;
the scanning module is further configured to scan data in the queried object according to the second query request, and also according to the information of the first location, the queried object, and the data acquiring mode which correspond to the query identifier, and add data obtained through scanning to the result set; and
the result set processing module is further configured to: after the result set meets the preset condition, trigger the scanning module to stop scanning, send the result set that meets the preset condition to the client, record information of a third location where the current scanning stops, and update the information of the first location which corresponds to the query identifier with the information of the third location which corresponds to the query identifier.

13. The data processing apparatus according to claim 11, wherein the receiving module is further configured to receive a second query request sent by the client, and the second query request contains the query identifier;
the scanning module is further configured to scan data in the queried object according to the second query request, the information of the first location corresponding to the query identifier, the queried object corresponding to the query identifier, the data acquiring mode corresponding to the query identifier, and the mapping information between the at least one data file and the at least one memory table; and add data obtained through scanning to the result set; and
the result set processing module is further configured to: after the result set meets the preset condition, trigger the scanning module to stop scanning, send the result set that meets the condition to the client, record information of a third location where the current scanning stops, and update the information of the first location which corresponds to the query identifier with the information of the third location which corresponds to the query identifier.

14. The data processing apparatus according to claim 9 or 10, the result set processing module is further specifically configured to: if the data acquiring mode is a mode in which a sorted result set is acquired, after the result set meets a preset condition, save the result set to a memory page, continue scanning, and after the scanning module completes scanning, sort all data saved in the memory page, add the sorted data to the result set that meets the preset condition, send the sorted data in batches to the client, and record information of a second location of each extraction;
wherein the temporary space comprises the memory page.

15. The data processing apparatus according to claim 9 or 10, wherein the result set processing module is further specifically configured to: if the data acquiring mode is a mode in which a sorted result set is acquired, after the result set meets a preset condition, save the result set to a memory page, sort, in the memory page, data in the result set, and then put a sorted result set in a temporary page; and after scanning is complete, sort, in the temporary space in a K-way merge manner, the sorted result set; sequentially extract and send the client, in batches, the result set that is sorted in the K-way merge manner, and recording the information of the second location of each extraction;
wherein the temporary space comprises the memory page and the temporary page.
